# EUROPEAN PATENT APPLICATION

(11) **EP 4 166 513 A1**
(43) Date of publication of application: **19.04.2023**
(21) Application number: 21202528.2
(22) Date of filing: 13.10.2021
(51) Int. Cl.: C02F 3/04, C02F 3/22

(54) **WASTEWATER TREATMENT SYSTEM**

(71) Applicant: Kingspan Water & Energy Ltd, Portadown, Armagh BT63 5LF (GB)
(72) Inventor: Copping, Paul, Kingscourt (IE)
(74) Representative: Tomkins & Co

(57) **Abstract**

A wastewater treatment system is provided comprising a primary settlement tank configured to receive wastewater; a secondary settlement tank configured to receive wastewater passed from the primary settlement tank; an air blower for lifting wastewater from the secondary settlement tank to distributer via an airlift, a distributor configured to distribute lifted water over a surface of the media bale; a final settlement tank for collecting filtered water from the media bale.

## Description

### Field of the Invention

The present invention relates to a wastewater treatment system and in particular to the graduated purification of wastewater through a tank with a series of chambers, including primary settlement, a plastic biological trickling filter and clarification.

### Background

Where connection to a mains sewer network is not possible, an off main wastewater treatment system is required to ensure the proper disposal of all wastewater generated on-site. The wastewater generated on-site must be handled in such a manner that it cannot flow untreated into surrounding lands or water courses. In these situations, a packaged wastewater treatment system is required for localised discharge. There exists a need for improvement over existing wastewater treatment systems.

### Summary

The present invention provides a wastewater treatment system comprising comprising:
a primary settlement tank configured to receive wastewater;
a secondary settlement tank configured to receive wastewater passed from the primary settlement tank;
an air blower for lifting wastewater from the secondary settlement tank via an airlift, the airlift for transporting water to a distributor, the distributor configured to distribute lifted wastewater over a surface of a media bale for filtering of the wastewater;
a final settlement tank for collecting filtered wastewater from the media bale.

The primary settlement tank is configured to receive wastewater and a secondary settlement tank may then receives the settled wastewater via transfer ports protected by scum baffles. An air blower is used for lifting the settled wastewater from the secondary settlement tank via an airlift which is protected by a shroud. This then transports the settled water to a distributor, the distributor is designed to distribute the lifted wastewater evenly over the media bale surface. A distribution or spray retention baffle may be used to ensure all liquor passes through the media bale. The purification of the distributed liquor then takes place via a trickling biological process. The liquor is distributed over the media bale continuously and the treated liquor is then displaced through the final settlement tank where clarification takes place, settling solids are returned to the SST and treated water is then discharged via managed flow.

The primary settlement tank is configured for initial settlement of wastewater such that a portion of solids in the wastewater sink in the tank and a portion of the solids in the wastewater float in the tank. This is advantageous as it provides for a first settling of solid material in the primary settlement tank. Smaller finer solids or less dense solids may float in the primary settlement tank and be passed or overflow into the secondary settlement tank.

The air blower may comprise a linear diaphragm or linear piston. This is advantageous as it provides for a mechanism to lift the water from the secondary tank to the distributor via a shrouded airlift.

The air blower may deliver 60 L/minute. This air volume ensures a sufficient uplift of wastewater to maintain a flow of water down through the trickling filter media bale.

The distributor is shaped to direct water evenly over the surface of the media bale. This is advantageous as it ensures the wastewater passes evenly through the media bale.

The media bale may comprise a biomass film for the biological treatment of the water. This may comprise capturing and digesting at least one of carbonaceous matter and ammonia from the wastewater. The media bale surface area supports attached biological growth for treatment of the water. The biological treatment is carried out by the supported biomass which capture and digest the carbonaceous matter and impurities from the wastewater. This provides for the removal of biological matter in an effective manner without the use of synthetic material or products.

The media bale may comprise an open top surface comprising a grid and a plurality of angled paths from the top surface to a bottom surface. Such an arrangement provides for effective filtering of small particles and dissolved pollutants from the water. The media bale may comprise a plastic material. This provides resilience to corrosion by long term exposure to wastewater

The wastewater treatment system may further comprise a return chamber configured to permit the flow of filtered water from the media bale back to the secondary settlement tank while blocking the flow of filtered water from the media bale back to the primary settlement tank. This is advantageous as this prevents disturbance of settled scum on the surface of the primary tank promoting good primary settlement.

The wastewater treatment system may further comprise a pump for discharging filtered water from the final settlement tank to one of a drainage area, watercourse or discharge point.

The present invention further provides a method of wastewater treatment, the method comprising the steps of receiving wastewater at a primary settlement tank; passing the wastewater from the primary settlement tank to a secondary settlement tank; air-lifting the water from the secondary settlement tank to an area above a media bale; distributing the lifted water across the surface of the media bale; filtering the water through the media bale; collecting a first portion of the filtered water from the media bale in the secondary settlement tank; collecting a second portion of the filtered water in a final settlement tank; discharging the second portion of the filtered water from the final settlement tank.

The second portion of the filtered water may comprise about 20% of the filtered water. The method of wastewater treatment may further comprise passing a further portion of the second portion of the filtered water back to the secondary settlement tank.

### Description of the Drawings

**Figure 1** is a schematic diagram of the wastewater treatment system according to the present invention
**Figure 1B** is a schematic diagram of a pipe valve
**Figure 2** is a schematic diagram of the shroud
**Figure 3** is a schematic diagram of the distributor and media bale features
**Figure 4** is a schematic diagram of the return chamber design
**Figure 5** is a schematic diagram of the final settlement tank
**Figure 6** is a further schematic diagram of the wastewater treatment system according to the present invention labelled to show the flow of water through the system.

### Detailed Description

The invention will not be described with reference to the accompanying figures throughout the figures, arrows indicate the flow path of wastewater throughout the system when in operation.

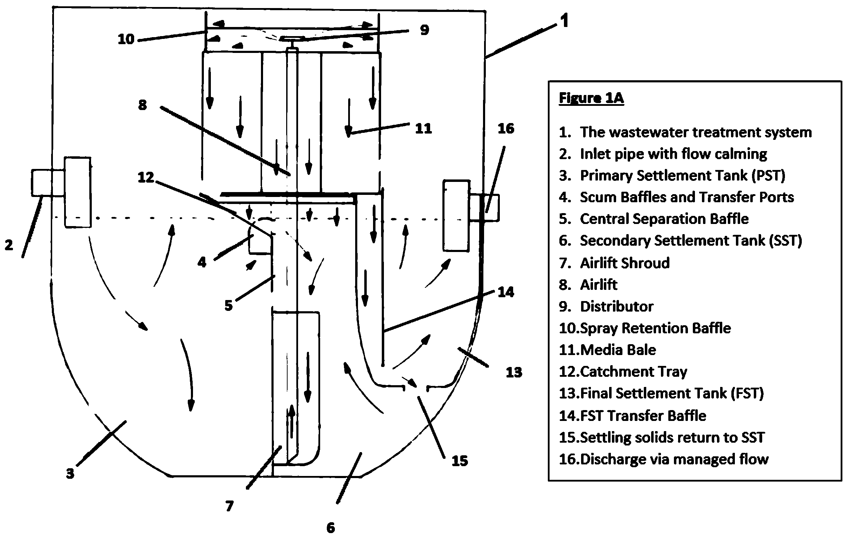

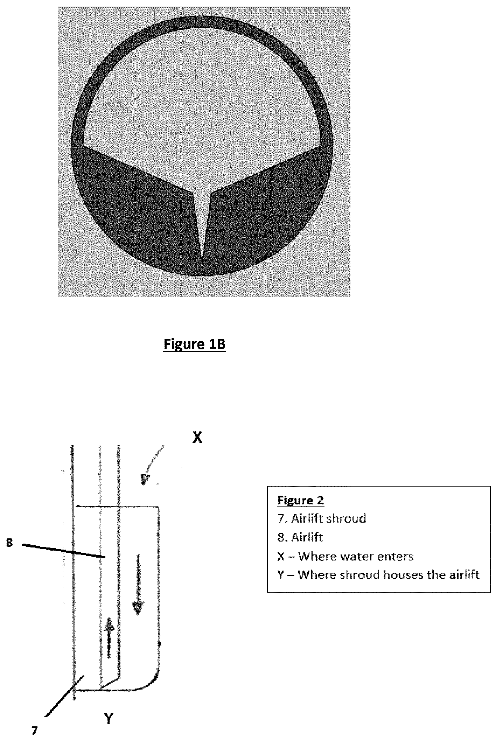

**Figure 1A** shows a wastewater treatment system 1 according to the present invention. The system comprises a primary settlement tank (PST) 3 configured to receive wastewater, also termed liquor. The wastewater is received, for example, via an inlet pipe 2 connected to the tank. The outlet pipe may be fitted with a v-notched weir (shown in **Figure 1B**). This provides for flow control on the outlet pipe and increases retention time throughout the wastewater system, thus giving improved performance. A secondary settlement tank (SST) 6 is provided and is configured to receive wastewater passed from the PST 3. The secondary settlement tank may receive the settled wastewater via transfer ports 4 protected by scum baffles.

Furthermore, the PST and SST are separated with a central separation baffle 5. An air blower is provided for lifting wastewater via airlift 8 from the SST to a distributer 9.

The airlift shroud 7 further shown in **Figure 2** is a chamber where the settled liquor in the SST enters to feed the airlift 8. Water enters at the point marked X. The shroud houses an airlift at point Y which may then lift the liquid from the shroud area through the airlift towards the distributor 9. The external air blower drives the air lift. A 60 L/minute air blower provides sufficient capacity to reliably lift wastewater via the airlift.

The distributor 9 is configured to distribute lifted water over a top surface of a media bale 11. The FST 13 is provided for collecting a portion of filtered water from the media bale.

The PST 3 is configured for initial settlement of wastewater such that a portion of solids in the wastewater sink in the tank and a portion of the solids in the wastewater float in the tank. This partially filtered water may then be passed to the SST.

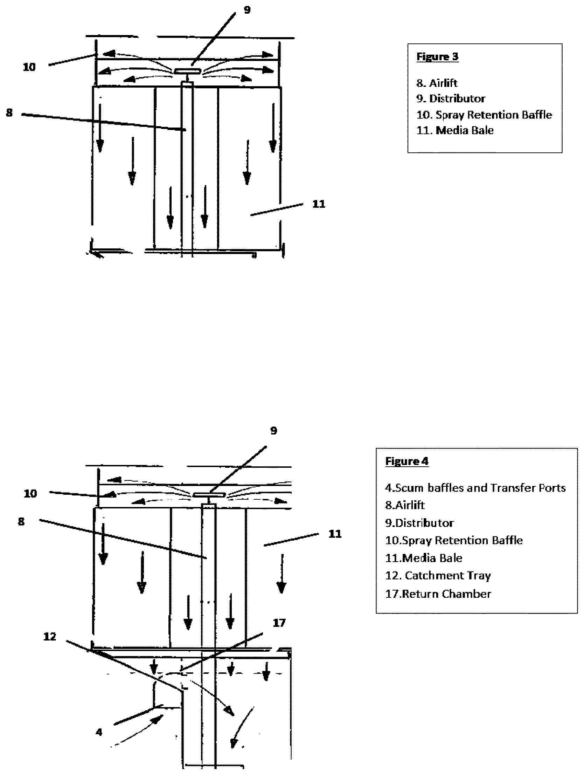

The distributor 9 is configured to ensure water is only distributed evenly over the surface of the media bale 11. The distributor is shown further in **Figure 3****.** Lifted water from the airlift 8 is sprayed from the circular distributor 9. Water strikes the distributor which has a curved, concave shape which has the effect of spreading the water over a wider area. The water then falls under gravity onto the media bale and then catchment tray 12 (as shown in Figure 1).

With further reference to Figure 1, the distributor 9 may comprise of one or more alternate flat surfaces to allow water to be retained so that it trickles though the media bale. A distribution or spray retention baffle 10 may be used to ensure all liquor passes through the media bale.

The distributor 9 is situated at the top of the media bale 11 and ensures all liquor that is lifted via the air lift passes through the media bale. This provides that all the lifted liquor is engaged in the treatment process. This provides for making the treatment process as efficient as possible.

The bale itself comprises media for biological treatment of the water, for example the bale may comprise a biomass material for breaking down of biological material in the wastewater. The biological treatment of the water comprises capturing and digesting carbonaceous matter from the wastewater. The media bale comprises a top surface comprising a grid and a plurality of angled paths from the top surface to a bottom surface.

The system further comprises a water return chamber 17 with a catchment tray 12, configured to permit the flow of filtered water from the media bale back to the SST while blocking the flow of filtered water from the media bale back to the PST. This return chamber is further shown in **Figure 4****.**

The return chamber with catchment tray prevents the re-entry of liquor to the PST and ensures that 80% of the volume enters the SST. The catchment tray 12 is designed to channel all the liquor through the bale back to the SST so as not to disturb the crucial settlement process that takes place in the PST.

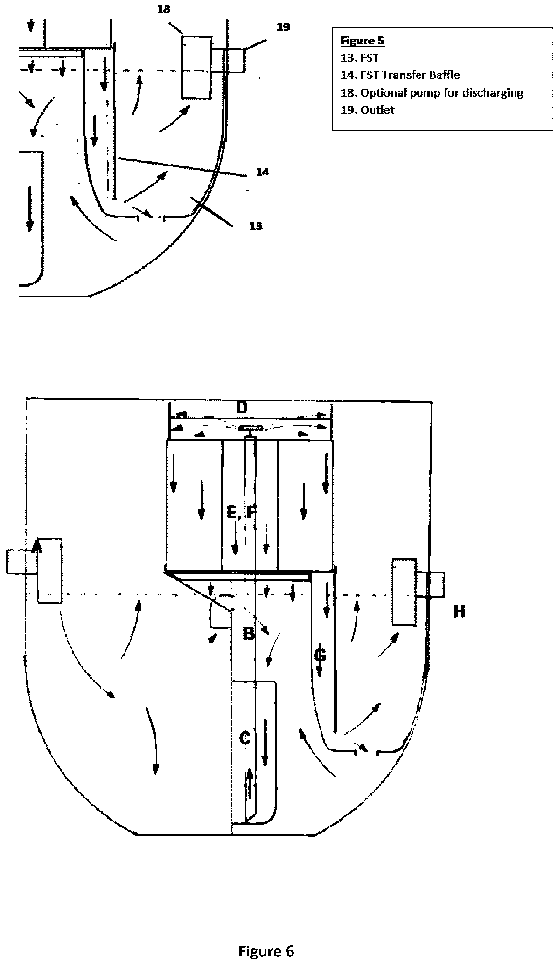

**Figure 5** shows FST 13 which is configured to ensure that fine solids in the FST drop back into the secondary settlement tank rather than staying in the FST.

A proportion of the bale sits over the FST which is split via a FST transfer baffle 14. This allows for approximately 20% of the liquor flowing through the bale to enter the FST. Once the liquor enters the FST, if there is a hydraulic load on the system only the treated liquor will pass up through the FST. The liquor is passed at a rate that allows any solids to settle. When there is no incoming load, the liquor entering the FST is recycled from the FST back to the SST taking any settling solids 15 with it. This prevents a sludge build up in the FST and creates a sludge blanket in the SST which is crucial in the treatment process. This process ensures that only the treated liquor is discharged.

The system may further comprise an optional pump 18 for discharging filtered water from the final settlement tank to one of a drainage area, watercourse or discharge point. The water may be pumped from a discharge outlet 19 taking wastewater from the final settlement tank to the external area via managed flow 16.

The invention provides method of wastewater treatment using the system as described. The method comprising the steps of i) receiving wastewater at a primary settlement tank, ii) passing the wastewater from the primary settlement tank to a secondary settlement tank, iii) lifting the water from the secondary settlement tank to an area above a media bale, iv) distributing the lifted water across the surface of the media bale, v) filtering the water through the media bale, vi) collecting a first portion of the filtered water from the media bale in the secondary settlement tank, vii) collecting a second portion of the filtered water in a final settlement tank, viii) discharging the second portion of the filtered water from the final settlement tank.

The wastewater treatment system of the invention will now be further described in use with reference to **Figure 6****.** The labelling A, B, C etc. on Figure 6 correlates to the steps in the treatment process as set out below.
**A.** Wastewater enters the primary settlement tank where an initial settlement process begins, with heavier solids sinking and lighter solids floating.
**B.** The settled water passes from the primary settlement tank into the Secondary Settlement Tank.
**C.** The airlift, which is controlled by a 60L/minute air blower, operates to continually lift the settled water in the airlift shroud above the media bale.
**D.** The lifted water hits the distributor at the top of the airlift, which directs the water out evenly across the biological treatment media bale.
**E.** The water then passes through the media bale. The bale is provided as a gridded open top plastic bale, with a number of angled flow paths through it. The water trickles through the bale.
**F.** Inside the bale there is build-up of a naturally occurring biomass, which captures the carbonaceous matter as it passes and digests it. This has the effect of continually cleaning the water. This is a continuous process, constantly improving the quality of the water in the secondary settlement tank. The treated wastewater is recycled back into the secondary settlement tank, leaving the primary settlement tank undisturbed.
**G.** Around 20% of the water that passes through the media bale enters the final settlement tank (FST). It is guided to the bottom of the FST. Fine solids in the water drop out of the FST back into the secondary settlement tank, and the treated water remains in the FST.
**H.** The treated liquor is discharged to the drainage field, watercourse or discharge point, by gravity or pump.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

## Claims

1. A wastewater treatment system comprising:
a primary settlement tank configured to receive wastewater;
a secondary settlement tank configured to receive wastewater passed from the primary settlement tank;
an air blower for lifting wastewater from the secondary settlement tank via an airlift, the airlift for transporting water to a distributor, the distributor configured to distribute lifted wastewater over a surface of a media bale for filtering of the wastewater;
a final settlement tank for collecting filtered wastewater from the media bale.

2. The wastewater treatment system of claim 1 wherein the primary settlement tank is configured for initial settlement of wastewater such that a portion of solids in the wastewater sink in the tank and a portion of the solids in the wastewater float in the tank.

3. The wastewater treatment system of claim 1 where the air blower comprises a 60 L/minute air blower.

4. The wastewater treatment system of any preceding claim wherein the distributor is shaped to direct water evenly over the surface of the media bale.

5. The wastewater treatment system of any preceding claim wherein the media bale comprises media for biological treatment of the water.

6. The wastewater treatment system of claim 5 wherein the media bale comprises a biomass film.

7. The wastewater treatment system of claim 6 wherein the biological treatment of the water comprises capturing and digesting at least one of carbonaceous matter and ammonia from the wastewater.

8. The wastewater treatment system of any preceding claim wherein the media bale comprises a top surface comprising a grid and a plurality of angled paths from the top surface to a bottom surface.

9. The wastewater treatment system of any preceding claim wherein the media bale comprises a plastic material.

10. The wastewater treatment system of any preceding claim further comprising a return chamber configured to permit the flow of filtered water from the media bale back to the secondary settlement tank while blocking the flow of filtered water from the media bale back to the primary settlement tank.

11. The wastewater treatment system of any preceding claim further comprising a pump for discharging filtered water from the final settlement tank to one of a drainage area, watercourse or discharge point.

12. A method of wastewater treatment, the method comprising the steps of:
receiving wastewater at a primary settlement tank;
passing the wastewater from the primary settlement tank to a secondary settlement tank;
air-lifting the water from the secondary settlement tank to an area above a media bale;
distributing the lifted water across the surface of the media bale;
filtering the water through the media bale;
collecting a first portion of the filtered water from the media bale in the secondary settlement tank;
collecting a second portion of the filtered water in a final settlement tank;
discharging the second portion of the filtered water from the final settlement tank.

13. The method of wastewater treatment of claim 12, wherein the second portion of the filtered water comprises about 20% of the filtered water.

14. The method of wastewater treatment of claim 13 further comprising passing a further portion of the second portion of the filtered water back to the secondary settlement tank.
